# EUROPÄISCHE PATENTSCHRIFT

(11) **EP 2 711 762 B1**
(45) Veröffentlichungstag und Bekanntmachung des Hinweises auf die Patenterteilung: **02.11.2022**
(21) Anmeldenummer: 13004529.7
(22) Anmeldetag: 17.09.2013
(51) Int. Cl.: G02B 27/14

(54) **Nichtpolarisierender Strahlteilerwürfel**
Non-polarising beam splitter cube
Cube de séparation de faisceau non polarisant

(30) Priorität: 19.09.2012 DE 102012018483
(43) Veröffentlichungstag der Anmeldung: 26.03.2014
(73) Patentinhaber: Qioptiq Photonics GmbH & Co. KG, 37081 Göttingen (DE)
(72) Erfinder: Bischoff, Martin, 37120 Bovenden (DE)
(74) Vertreter: Mewburn Ellis LLP

(56) Entgegenhaltungen:
- EP-A2- 1 965 229
- JP-A- S6 435 402
- JP-A- 2009 031 406
- JP-A- 2009 192 708
- US-A- 4 367 921
- US-A- 5 400 179
- US-A1- 2012 212 830
- ALEXANDER TIKHONRAVOV ET AL: "Development of the needle optimization technique and new features of "OptiLayer" design software", PROCEEDINGS OF SPIE, IEEE, US, vol. 2253, 4 November 1994 (1994-11-04), pages 10-20, XP007915354, ISBN: 978-1-62841-730-2

## Beschreibung

Die Erfindung betrifft einen nichtpolarisierenden Strahlteilerwürfel.

Derartige Strahlteilerwürfel sind allgemein bekannt und weisen wenigstens zwei Substrate auf, zwischen denen eine eine Schichtenfolge von Brechungsschichten aufweisende Beschichtung aufgenommen ist. Ein solcher Strahlteilerwürfel ist beispielsweise durch US 5, 179, 471 bekannt.

Durch JP 60 113 203 A ist ein nichtpolarisierender Strahlteiler bekannt, bei dem zwischen zwei Substraten eine eine Schichtenfolge von Brechungsschichten aufweisende Beschichtung aufgenommen ist. Die Schichtenfolge weist eine Metallschicht aus Silber sowie Brechungsschichten aus dielektrischem Material auf. Die Brechungsschichten weisen Schichten aus hochbrechendem Material und Schichten aus niedrigbrechendem Material auf.

Ein ähnlicher Strahlteiler ist auch durch JP 61 011 701 A, JP 2009 031404 A,

JP S64 35402 A und US 5,400,179 A bekannt. EP 1 965 229 A2 offenbart einen Laserspiegel.

Durch US 4,367,921 ist ein nichtpolarisierender Strahlteiler Art bekannt, der ein Substrat aufweist, auf das eine eine Schichtenfolge von Brechungsschichten aufweisende Beschichtung aufgebracht ist. Die Schichtenfolge weist jeweils wenigstens eine Schicht aus einem niedrigbrechenden Material, wenigstens eine Schicht aus einem mittel brechenden Material und wenigstens eine Schicht aus einem hochbrechenden Material auf, wobei die Brechungsschichten aus dielektrischem Material bestehen. Darüber hinaus weist die Schichtenfolge eine Metallschicht aus Gold auf.

Durch US 5 400 179 ist ein Strahlteilerwürfel bekannt, bei dem zwischen zwei Substraten unterschiedlicher Brechzahl eine Beschichtung aufgenommen ist.

Durch DE 103 24 602 A1 ist ein Strahlteilerwürfel bekannt, bei dem die Beschichtung aus Dünnfilmgruppen besteht.

US 5 717 523 zeigt und beschreibt eine Strahteilerplatte.

Durch US 2008/0204862 ist ein Strahlteiler bekannt, der für eine Verwendung in Lasersystemen mit Wellenlängen < 200 nm vorgesehen ist.

Der Erfindung liegt die Aufgabe zugrunde, einen nichtpolarisierenden Strahlteilerwürfel anzugeben, der hinsichtlich seiner optischen Eigenschaften verbessert ist und der relativ einfach aufgebaut ist.

Diese Aufgabe wird durch die im Anspruch 1 angegebene Erfindung gelöst.

Die Erfindung sieht vor, dass die Schichtenfolge metallschichtfrei ausgebildet ist und dass die Substrate die gleiche Brechzahl haben und dass die Brechzahl der Substrate > 1,55. Es hat sich überraschend gezeigt, dass sich auf diese Weise im Hinblick auf den beabsichtigten Verwendungszweck eines nichtpolarisierenden Strahlteilers besonders günstige optische Eigenschaften bei einem gleichzeitig einfachen Aufbau ergeben. Ist bei einem nichtpolarisierenden Strahlteiler, der nachfolgend auch kurz als Strahlteiler bezeichnet wird, ein Teilungsverhältnis von 50:50 zwischen reflektiertem und transmittiertem Licht gewünscht, so läßt sich mit der erfindungsgemäßen Lehre ein sehr breitbandiges Design umsetzen, bei dem das gewünschte Teilungsverhältnis in einem großen Wellenlängenbereich zwischen 400 und 1.200 nm erhalten bleibt.

Äußerst vorteilhaft ist, dass die Erfindung einen Strahlteiler bereitstellt, der eine sehr geringe Polarisationsaufspaltung hat.

Ein weiterer Vorteil der Erfindung besteht darin, dass die Absorption gegenüber aus dem Stand der Technik bekannten Designs wesentlich geringer ist.

Je nach gewünschter Anwendung sind mittels der Erfindung unterschiedliche Designs möglich. Beispielsweise stellt die Erfindung einen sehr breitbandigen Strahlteiler zur Verfügung. Die Erfindung kann jedoch auch einen Strahlteiler bereitstellen, der an einer oder im Bereich einer Zentralwellenlänge oder an oder im Bereich von zwei Wellenlängen die gewünschten Eigenschaften hat.

Ein besonderer Vorteil der Erfindung besteht darin, dass sich gewünschte Designs mit einer relativ geringen Anzahl von Schichten realisieren lassen. Der erfindungsgemäße Strahlteiler ist damit relativ einfach aufgebaut und damit relativ einfach und kostengünstig herstellbar. In Abgrenzung zu einem polarisierenden Strahlteiler versteht die Erfindung unter einem nichtpolarisierenden Strahlteiler einen Strahlteil er, bei dem eine Polarisationsaufspaltung soweit wie möglich vermieden wird, während bei einem polarisierenden Strahlteiler eine Aufspaltung der Polarisation erwünscht ist. Dementsprechend wird erfindungsgemäß unter einem nicht-polarisierenden Strahlteiler auch ein Strahlteiler verstanden, bei dem es zu einer im Sinne des jeweiligen Verwendungszweckes geringfügigen Polarisationsaufspaltung kommt.

Die Brechzahlen der Schichten aus niedrigbrechendem Material, mittelbrechendem Material und hochbrechendem Material sind, absolut sowie in ihrer Relation zueinander, entsprechend dem jeweiligen Anwendungsfall innerhalb weiter Grenzen wählbar. Erfindungsgemäß weist die oder jede Schicht aus niedrigbrechendem Material eine Brechzahl von 1,3 bis 1,5 und die oder jede Schicht aus mittel brechendem Material eine Brechzahl von > 1,5 bis 1,8 und die oder jede Schicht aus hochbrechendem Material eine Brechzahl > 1,8 bis 2,4 auf. Auch die einzelnen Materialien der Brechungsschichten sind innerhalb weiter Grenzen wählbar. Erfindungsgemäß ist oder enthält das hochbrechende Material ein oxidisches Material, wobei das oxidische Material TiO₂ ist oder enthält.

Das mittelbrechende Material ist oder enthält ein oxidisches Material. Das oxidische Material ist oder enthält Al₂O₃.

Das niedrigbrechende Material ist oder enthält ein oxidisches und/oder fluoridisches Material. Das fluoridische Material ist oder enthält AlF₃. Das oxidische Material ist oder enthält SiO₂.

Die Brechzahl der erfindungsgemäß gewählten Substrate liegt vorzugsweise im Bereich 1,55 bis 1,95, kann jedoch je nach Wellenlänge des verwendeten Lichts variieren. Beispielsweise kann Quarz mit einer Brechzahl von 1,46 bei 550nm und von 1,51 bei 250nm als Substratmaterial für den VIS/NIR- sowie den UV-Spektralbereich verwendet werden. Erforderlichenfalls können erfindungsgemäß auch Substrate mit unterschiedlicher Brechzahl verwendet werden.

Eine andere vorteilhafte Weiterbildung der Erfindung sieht vor, dass die Beschichtung wenigstens zwei Schichten aus niedrigbrechendem Material und/oder wenigstens zwei Schichten aus mittelbrechendem Material und/oder wenigstens zwei Schichten aus hochbrechendem Material aufweist.

Um die Herstellung des erfindungsgemäßen Strahlteilerwürfels zu vereinfachen, sieht eine andere vorteilhafte Weiterbildung der Erfindung vor, dass die Schichten aus niedrigbrechendem Material aus demselben Material bestehen und/oder dass die Schichten aus mittelbrechendem Material aus demselben Material bestehen und/oder dass die Schichten aus hochbrechendem Material aus demselben Material bestehen.

Erfindungsgemäß weist die Beschichtung wenigstens 20 Schichten auf. Die Erfindung wird nachfolgend anhand von Ausführungsbeispielen unter Bezugnahme auf die beigefügte Zeichnung näher erläutert. Dabei bilden alle beschriebenen, in der Zeichnung dargestellten und in den Patentansprüchen beanspruchten Merkmale, für sich genommen sowie in beliebiger geeigneter Kombination miteinander, den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1: stark schematisiert den Grundaufbau eines erfindungsgemäßen nichtpolarisierenden Strahlteilerwürfels,
- Fig. 2: stark schematisiert und rein exemplarisch die Schichtenfolge einer Beschichtung eines erfindungsgemäßen nichtpolarisierenden Strahlteilerwürfels,
- Fig. 3: das wellenlängenabhängige Transmissions-verhalten eines ersten Beispiels eines nichtpolarisierenden Strahlteilerwürfels, der nicht unter den beanspruchten Schutzumfang fällt;
- Fig. 4: in gleicher Darstellung wie Fig. 3 das wellenlängenabhänginge Transmissionsverhalten eines zweiten Beispiels eines nichtpolarisierenden Strahlteilerwürfels, der nicht unter den beanspruchten Schutzumfang fällt;
- Fig. 5: in gleicher Darstellung wie Fig. 3 das wellenlängenabhängige Transmissionsverhalten eines dritten Beispiels eines nichtpolarisierenden Strahlteilerwürfels, der nicht unter den beanspruchten Schutzumfang fällt; und
- Fig. 6: in gleicher Darstellung wie Fig. 3 das wellenlängenabhängige Transmissionsverhalten eines erfindungsgemäßen Ausführungsbeispieles.

In den Figuren der Zeichnung sind gleiche bzw. sich entsprechende Bauteile mit den gleichen Bezugszeichen versehen.

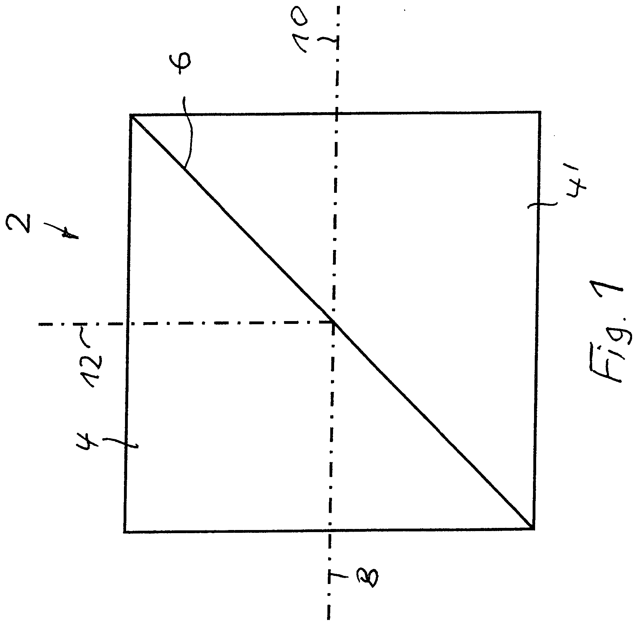

In Fig. 1 ist stark schematisiert der Grundaufbau eines erfindungsgemäßen nichtpolarisierenden Strahlteilerwürfels 2, der nachfolgend auch kurz als Strahlteiler bezeichnet wird, in einer Seitenansicht dargestellt, der aus prismenartigen Substraten 4, 4' zusammengesetzt ist, zwischen denen eine teilreflektierende, eine Mehrzahl von Brechungsschichten aufweisende Beschichtung 6 aufgenommen ist. Die Funktion des Strahlteilers 2 besteht darin, einen einfallenden Lichtstrahl 8 durch Teiltransmission bzw.

Teilreflektion in zwei Teilstrahlen 10, 12 aufzuspalten. Im Übrigen sind Aufbau und Funktionsweise eines nichtpolarisierenden Strahlteilers dem Fachmann allgemein bekannt und werden daher hier nicht näher erläutert. Bei dem dargestellten Ausführungsbeispiel sind die Substrate 4, 4' fest miteinander verbunden.

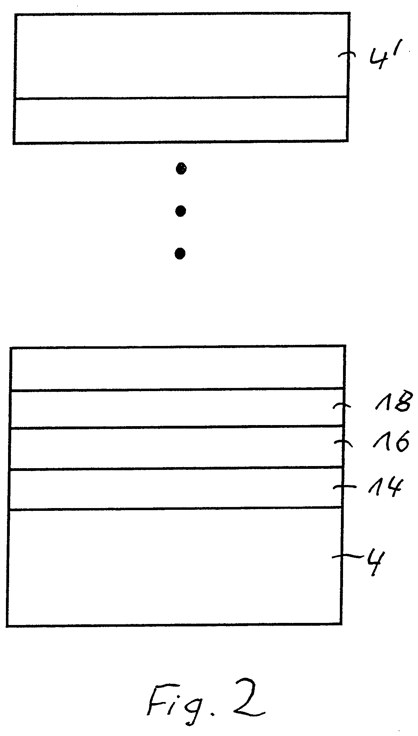

Der Aufbau der Beschichtung 6 wird nachfolgend anhand von Fig. 2 näher erläutert. Fig. 2 stellt nicht maßstäblich einen Schnitt durch die Beschichtung 6 dar. Die Beschichtung 6 weist eine Schichtenfolge von Brechungsschichten auf, wobei die Schichtenfolge jeweils wenigstens eine Schicht 14 aus einem niedrigbrechenden Material, wenigstens eine Schicht 16 aus einem mittel brechenden Material und wenigstens eine Schicht 18 aus einem hochbrechenden Material aufweist, die aus dielektrischem Material bestehen. Die Brechungsschichten sind zwischen den Substraten 4, 4' aufgenommen. Die Art und Weise, wie ein solcher nichtpolarisierender Strahlteiler durch Aufbringen der Brechungsschichten und Verbinden der Substrate 4, 4' hergestellt wird, ist dem Fachmann allgemein bekannt und wird daher hier nicht näher erläutert.

Erfindungsgemäß ist die Schichtenfolge metallschichtfrei ausgebildet, wobei die Substrate 4, 4' aus einem Material bestehen, das eine Brechzahl von > 1,55 hat. Ist der nichtpolarisierende Strahlteiler 2, der nachfolgend auch kurz als Strahlteiler 2 bezeichnet wird, für eine Funktion im sichtbaren Wellenlängenbereich des Lichtes ausgelegt, so liegt die Brechzahl vorzugsweise im Bereich > 1,55 - 1, 95.

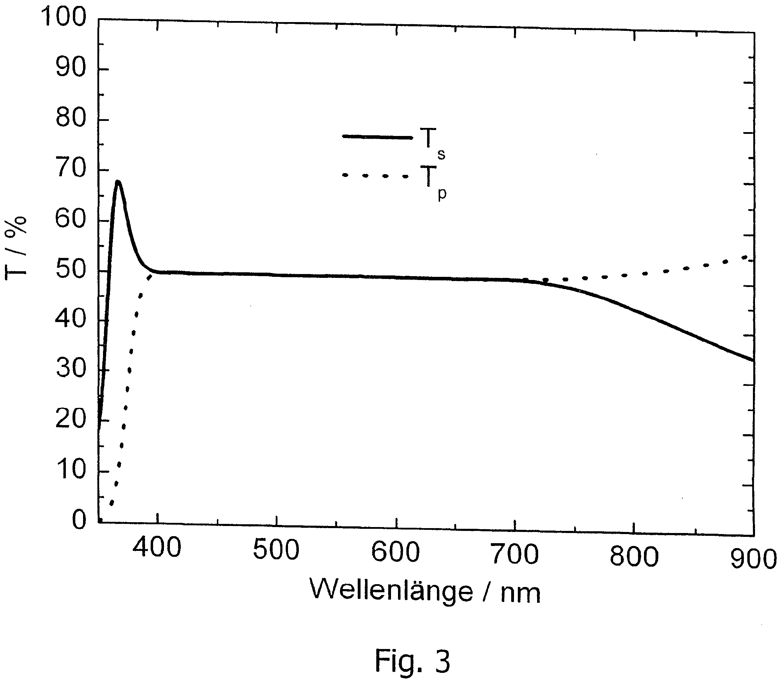

Fig. 3 stellt das wellenlängenabhängige Transmissionsverhalten eines ersten beispielhaften Strahlteilers 2 dar. Dieses Beispiel ist hilfreich für das Verständnis der beanspruchten Erfindung, fällt jedoch nicht unter den Gegenstand des Anspruchs 1. Dieses Beispiel ist für eine breitbandige Funktion ausgelegt. Die Schichtenfolge ist wie folgt:

| **Schichtnummer** | **physikalische Schichtdicke [nm]** | **Material** | |
|---|---|---|---|
| 1 | 35,7 | L | H=TiO₂; L=AlF₃; |
| 2 | 20,3 | H | A=Al₂O₃; |
| 3 | 103,8 | L | Substrat: Quarz |
| 4 | 17,2 | H | |
| 5 | 167,5 | L | |
| 6 | 169,2 | A | |
| 7 | 50,0 | H | |
| 8 | 122,5 | L | |
| 9 | 12,4 | H | |
| 10 | 109,3 | L | |
| 11 | 89,5 | A | |
| 12 | 114,7 | L | |
| 13 | 194,2 | A | |

Hierbei bezeichnet L eine Schicht aus niedrigbrechendem Material, die bei diesem Beispiel aus AlF₃ besteht, während A eine Schicht aus mittelbrechendem Material bezeichnet, die bei diesem Beispiel aus Al₂O₃ besteht. H bezeichnet eine Schicht aus hochbrechendem Material, die bei diesem Beispiel aus TiO₂ besteht. Die Substrate 4, 4' bestehen bei diesem Beispiel aus N-SF66.

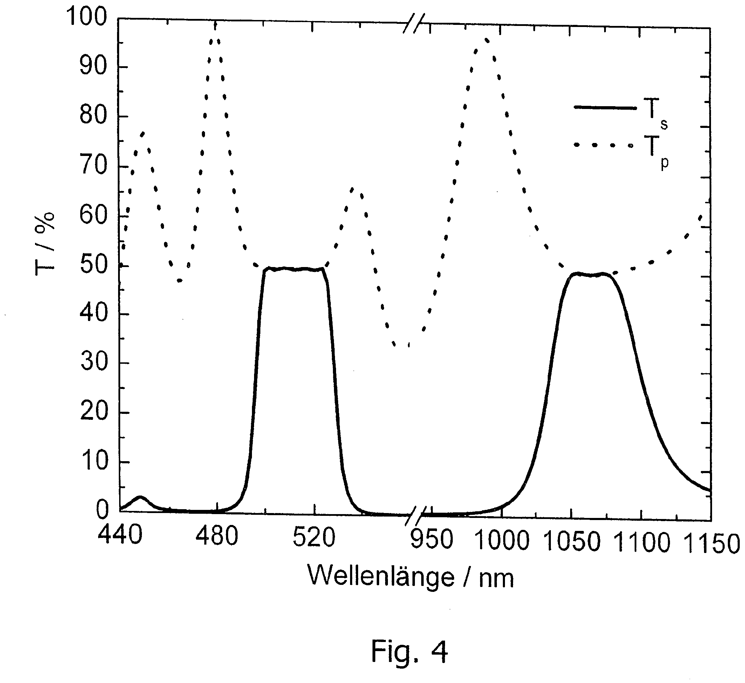

Wie aus Fig. 3 ersichtlich, ist der Strahlteiler 2 bei diesem Beispiel für eine breitbandige Funktion in einem breiten Wellenlängenbereich zwischen etwa 400 und etwa 700 nm ausgelegt. Aus Fig. 3 ist ersichtlich, dass es in diesem Wellenlängenbereich nicht zu einer nennenswerten Polarisationsaufspaltung kommt, so dass im Ergebnis im Vergleich zum Stand der Technik eine deutlich geringere Polarisationsaufspaltung realisiert ist. Aufgrund der Verwendung ausschließlich dielektrischer Materialien, also eines Aufbaus ohne Metallschicht, ist die Absorption des Lichtes vernachlässigbar gering. Das dargestellte Beispiel bietet damit ausgezeichnete optische Eigenschaften. Da zur Realisierung dieser Eigenschaften lediglich 13 Schichten erforderlich sind, ist der Aufbau des Strahlteilers 2 einfach gehalten, so dass seine Herstellung wesentlich vereinfacht ist. In Fig. 4 ist das wellenlängenabhängige Transmissionsverhalten eines zweiten

Beispiels dargestellt. Dieses Beispiel ist hilfreich für das Verständnis der beanspruchten Erfindung, fällt jedoch nicht unter den Gegenstand des Anspruchs 1. Dieses Beispiel ist für eine Funktion bei zwei Zentral wellen längen bei etwa 510 nm und etwa 1050 nm ausgelegt. Der Aufbau des zweiten

Beispiels ist wie folgt:

| Schichtnummer | physikalische Schichtdicke [nm] | Material | H=TiO₂; L=SiO₂; |
|---|---|---|---|
| 1 | 94,2 | H | A=Al₂O₃ |
| 2 | 61,6 | A | Substrat: Quarz |
| 3 | 264,2 | L | |
| 4 | 178,0 | A | |
| 5 | 115,6 | H | |
| 6 | 34,6 | L | |
| 7 | 260,4 | A | |
| 8 | 95,1 | H | |
| 9 | 108,3 | L | |
| 10 | 135,7 | A | |
| 11 | 67,8 | H | |
| 12 | 117,7 | L | |
| 13 | 38,5 | H | |
| 14 | 112,9 | A | |
| 15 | 40,7 | H | |
| 16 | 59,5 | L | |
| 17 | 34,5 | H | |
| 18 | 91,3 | L | |
| 19 | 30,9 | H | |
| 20 | 105,5 | A | |
| 21 | 60,3 | H | |
| 22 | 149,4 | L | |
| 23 | 68,0 | H | |
| 24 | 48,4 | A | |
| 25 | 138,7 | L | |
| 26 | 81,1 | H | |
| 27 | 46,0 | L | |
| 28 | 181,8 | A | |
| 29 | 92,3 | L | |
| 30 | 82,9 | H | |
| 31 | 223,1 | A | |
| 32 | 117,2 | H | |
| 33 | 225,1 | A | |
| 34 | 23,8 | H | |
| 35 | 31,5 | L | |
| 36 | 60,5 | H | |
| 37 | 24,0 | L | |
| 38 | 250,3 | A | |

Hierbei bestehen die niedrigbrechenden Schichten (L) aus Si0₂, die mittel brechenden Schichten (A) aus Al₂O₃ und die hochbrechenden Schichten (H) aus TiO₂. Die Substrate 4, 4' bestehen aus Quarz. Auch in Bezug auf dieses Beispiel ist bemerkenswert, dass die Beschichtung 6 aus einer relativ geringen Anzahl von Schichten, nämlich aus 38 Schichten besteht.

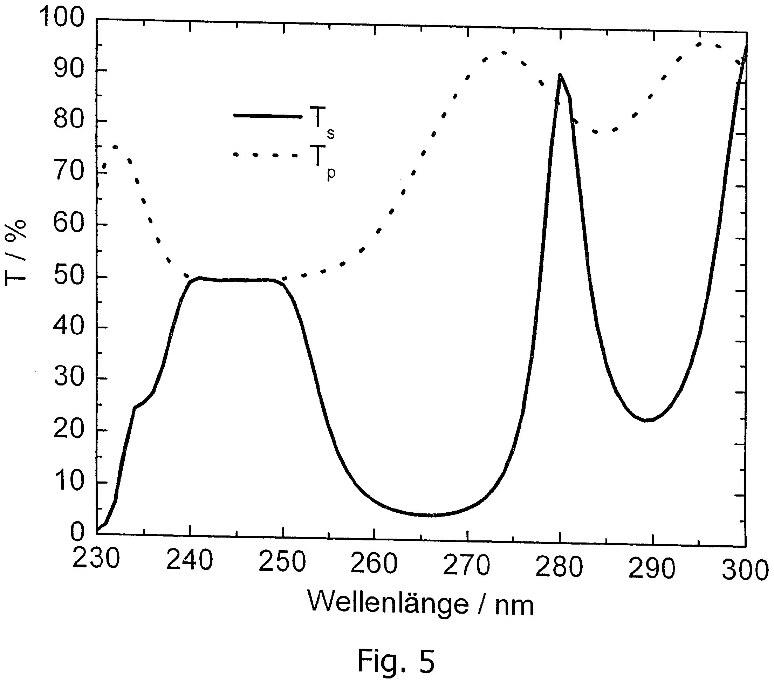

In Fig. 5 ist das wellenlängenabhängige Transmissionsverhalten eines dritten Beispiels eines Strahlteilers 2 dargestellt. Dieses Beispiel ist hilfreich für das Verständnis der beanspruchten Erfindung, fällt jedoch nicht unter den Gegenstand des Anspruchs 1. Dieses Beispiel ist auf eine Funktion bei einer Zentralwellenlänge von etwa 245 nm ausgelegt. Der Aufbau dieses Beispiels ist wie folgt:

| Schichtnummer | physikalische Schichtdicke [nm] | Material | |
|---|---|---|---|
| 1 | 26,7 | H | H=HfO₂; L=SiO₂; |
| 2 | 17,9 | A | A=Al₂O₃ |
| 3 | 59,0 | L | Substrat: Quarz |
| 4 | 33,4 | A | |
| 5 | 90,6 | H | |
| 6 | 45,1 | A | |
| 7 | 20,1 | H | |
| 8 | 28,6 | L | |
| 9 | 26,3 | A | |
| 10 | 10,1 | H | |
| 11 | 31,8 | L | |
| 12 | 16,2 | H | |
| 13 | 40,6 | A | |
| 14 | 27,1 | H | |
| 15 | 43,0 | A | |
| 16 | 27,8 | H | |
| 17 | 43,3 | A | |
| 18 | 23,9 | H | |
| 19 | 20,9 | L | |
| 20 | 28,5 | A | |
| 21 | 15,9 | H | |
| 22 | 34,7 | L | |
| 23 | 17,7 | H | |
| 24 | 40,9 | L | |
| 25 | 21,7 | H | |
| 26 | 43,0 | A | |
| 27 | 28,1 | H | |
| 28 | 44,4 | A | |
| 29 | 126,4 | H | |
| 30 | 26,7 | L | |
| 31 | 60,4 | H | |
| 32 | 88,7 | A | |
| 33 | 15,5 | H | |
| 34 | 56,6 | A | |

Hierbei bestehen die Schichten aus niedrigbrechendem Material (L) aus SiO₂, die Schichten aus mittelbrechendem Material (A) aus Al₂O₃ und die Schichten aus hochbrechendem Material (H) aus HfO₂. Die Substrate 4, 4' bestehen aus Quarz.

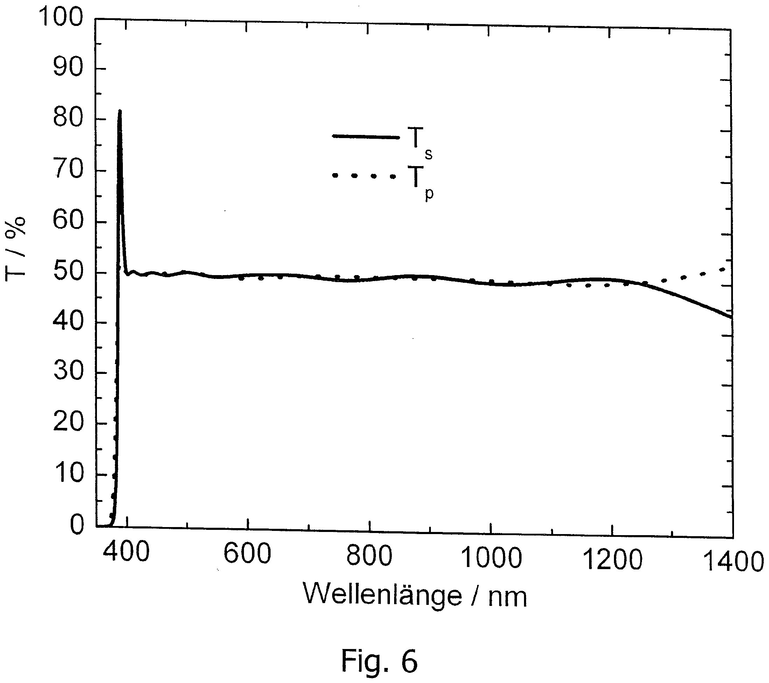

In Fig. 6 ist das wellenlängenabhängige Transmissionsverhalten eines Ausführungsbeispieles eines erfindungsgemäßen Strahlteilers dargestellt, bei dem die Breitbandigkeit gegenüber dem Beispiel gemäß Fig. 3 noch erhöht ist und der für eine Funktion in einem Wellenlängenbereich von etwa 400 nm bis etwa 1.200 nm ausgelegt ist. Der Aufbau der Schichtenfolge dieses Ausführungsbeispieles ist wie folgt:

| Schichtnummer | physikalische Schichtdicke [nm] | Material | |
|---|---|---|---|
| 1 | 33,9 | L | H=TiO₂; L=AlF₃; |
| 2 | 32,4 | H | A=Al₂O₃ |
| 3 | 84,1 | L | Substrat: N-SF66 |
| 4 | 25,9 | H | |
| 5 | 161,2 | L | |
| 6 | 18,4 | H | |
| 7 | 228,3 | L | |
| 8 | 10,6 | H | |
| 9 | 81,0 | L | |
| 10 | 12,8 | H | |
| 11 | 117,1 | L | |
| 12 | 212,7 | A | |
| 13 | 43,3 | H | |
| 14 | 223,1 | L | |
| 15 | 12,6 | H | |
| 16 | 185,3 | L | |
| 17 | 10,2 | H | |
| 18 | 152,5 | L | |
| 19 | 113,9 | A | |
| 20 | 91,3 | L | |
| 21 | 13,7 | H | |
| 22 | 70,9 | L | |
| 23 | 200,9 | A | |

Hierbei bestehen die Schichten aus niedrigbrechendem Material (L) aus AlF₃, die Schichten aus mittelbrechendem Material (A) aus Al₂O₃ und die Schichten aus hochbrechendem Material (H) aus TiO₂. Die Substrate 4, 4' bestehen aus N-SF66.

Die Erfindung stellt damit einen nichtpolarisierenden Strahlteiler zur Verfügung, der eine vernachlässigbare Absorption und zum Vergleich zum Stand der Technik eine deutlich geringere Polarisationsaufspaltung aufweist. Entsprechend den jeweiligen Anforderungen ist das Teilungsverhältnis zwischen Reflektion und Transmission innerhalb weiter Grenzen einstellbar. Ein besonderer Vorteil der Erfindung besteht darin, dass sowohl sehr breitbandige als auch hinsichtlich ihres Transmissionsverhaltens komplexe optische Designs mit einer verhältnismäßig geringen Anzahl von Brechungsschichten realisiert werden können.

## Patentansprüche

1. Nichtpolarisierender Strahlteilerwürfel,
mit wenigstens zwei Substraten (4, 4'), zwischen denen eine eine Schichtenfolge von Brechungsschichten aufweisende Beschichtung (6) aufgenommen ist,
wobei die Schichtenfolge (6) jeweils wenigstens eine Schicht (14) aus niedrigbrechendem Material, wenigstens eine Schicht (16) aus mittelbrechendem Material und wenigstens eine Schicht (18) aus hochbrechendem Material aufweist, wobei die Brechungsschichten aus dielektrischem Material bestehen,
wobei die Schichtenfolge (6) metallschichtfrei ausgebildet ist und
wobei die Substrate (4, 4') die gleiche Brechzahl haben und die Brechzahl der Substrate (4, 4') > 1,55 ist, sodass
ein vorbestimmtes Teilungsverhältnis von 50:50 in einem Wellenlängenbereich zwischen 400 nm und 1200 nm erhalten bleibt,
wobei das niedrigbrechende Material ein erstes oxidisches und/oder
ein fluoridisches Material ist oder enthält, das erste oxidische Material SiO₂ ist oder enthält und das fluoridische Material AlF₃ ist oder enthält,
wobei das mittelbrechende Material ein zweites oxidisches Material ist oder enthält, und das zweite oxidische Material Al₂O₃ ist oder enthält,
wobei das hochbrechende Material ein drittes oxidisches Material ist oder enthält, und das dritte oxidische Material TiO₂ ist oder enthält,
wobei die Beschichtung wenigstens 20 Schichten aufweist, und
wobei die oder jede Schicht aus niedrigbrechendem Material eine Brechzahl von 1,3 bis 1,5 aufweist, die oder jede Schicht aus mittelbrechendem Material eine Brechzahl von > 1,5 bis 1,8 aufweist und die oder jede Schicht aus hochbrechendem Material eine Brechzahl von > 1,8 bis 2,4 aufweist.

2. Strahlteilerwürfel nach Anspruch 1, wobei die Beschichtung (6) wenigstens zwei Schichten (14) aus niedrigbrechendem Material und/oder wenigstens zwei Schichten (16) aus mittelbrechendem Material und/oder wenigstens zwei Schichten (18) aus hochbrechendem Material aufweist.

3. Strahlteilerwürfel nach einem der vorhergehenden Ansprüche, wobei
die Schichten (14) aus niedrigbrechendem Material aus demselben Material bestehen und/oder die Schichten (16) aus mittelbrechendem Material (16) aus demselben Material bestehen und/oder
die Schichten (18) aus hochbrechendem Material aus demselben Material bestehen.

## Claims

1. A non-polarising beam-splitter cube comprising at least two substrates (4, 4') between which a coating (6) having a sequence of refractive layers is received, said sequence of layers (6) having at least one layer (14) of a low-refractive-index material, at least one layer (16) of a medium-refractive-index material and at least one layer (18) of a high-refractive-index material,
wherein said refractive layers are made of a dielectric material,
wherein said sequence of layers (6) is formed to be free of metal layers and
wherein said substrates (4, 4') have the same refractive index and the refractive index of the substrates (4, 4') is > 1.55, so that a predetermined 50:50 splitting ratio is maintained over a wave length range between 400 nm and 1,200 nm,
wherein said low-refractive-index material is or contains a first oxidic and/or fluoridic material, said first oxidic material being or containing SiO₂ and said fluoridic material being or containing AlF₃,
wherein said medium-refractive-index material is or contains a second oxidic material, said second oxidic material being or containing Al₂O₃,
wherein said high-refractive-index material is or contains a third oxidic material, said third oxidic material being or containing TiO₂,
wherein said coating has at least 20 layers and the or each layer of low-refractive-index material has a refractive index of 1.3 to 1.5, the or each layer of medium-refractive-index material has a refractive index of > 1.5 to 1.8, and the or each layer of high-refractive-index material has a refractive index of > 1.8 to 2.4.

2. The beam-splitter cube according to claim 1, wherein the coating (6) has at least two layers (14) of a low-refractive-index material, and/or at least two layers (16) of a medium-refractive-index material and/or at least two layers (18) of a high-refractive-index material.

3. The beam-splitter cube according to any one of the preceding claims, wherein the layers (14) of a low-refractive-index material consist of the same material and/or the layers (16) of a medium-refractive-index material consist of the same material and/or the layers (18) of the high-refractive-index material consist of the same material.

## Revendications

1. Cube de séparation de faisceau non polarisant,
comprenant au moins deux substrats (4, 4'), entre lesquels un revêtement (6) présentant une succession de couches constituée de couches de réfraction est logé,
dans lequel la succession de couches (6) présente respectivement au moins une couche (14) de matériau à faible réfraction, au moins une couche (16) de matériau à réfraction moyenne et au moins une couche (18) de matériau à réfraction élevée, dans lequel les couches de réfraction sont constituées d'un matériau diélectrique,
dans lequel la succession de couches (6) est formée sans couche métallique, et
dans lequel les substrats (4, 4') ont le même indice de réfraction et l'indice de réfraction des substrats (4, 4') est > 1,55, de sorte qu'un rapport de division prédéterminé de 50:50 est maintenu dans une plage de longueurs d'onde entre 400 nm et 1 200 nm,
dans lequel le matériau à faible réfraction est ou contient un premier matériau oxydé et/ou fluoré, le premier matériau oxydé est ou contient du SiO₂, et le matériau fluoré est ou contient du AlF₃,
dans lequel le matériau à réfraction moyenne est ou contient un deuxième matériau oxydé, et le deuxième matériau oxydé est ou contient du Al₂O₃,
dans lequel le matériau à réfraction élevée est ou contient un troisième matériau oxydé, et le troisième matériau oxydé est ou contient du TiO₂,
dans lequel le revêtement présente au moins 20 couches, et
dans lequel la ou chaque couche de matériau à faible réfraction présente un indice de réfraction de 1,3 à 1,5, la ou chaque couche de matériau à réfraction moyenne présente un indice de réfraction de > 1,5 à 1,8, et la ou chaque couche de matériau à réfraction élevée présente un indice de réfraction de > 1,8 à 2,4.

2. Cube de séparation de faisceau selon la revendication 1, dans lequel le revêtement (6) présente au moins deux couches (14) de matériau à faible réfraction et/ou au moins deux couches (16) de matériau à réfraction moyenne et/ou au moins deux couches (18) de matériau à réfraction élevée.

3. Cube de séparation de faisceau selon l'une quelconque des revendications précédentes, dans lequel les couches (14) de matériau à faible réfraction sont constitués du même matériau et/ou les couches (16) de matériau à réfraction moyenne sont constitués du même matériau et/ou les couches (18) de matériau à réfraction élevée sont constitués du même matériau.
